# EUROPÄISCHE PATENTANMELDUNG

(11) **EP 0 565 931 A1**
(43) Veröffentlichungstag der Anmeldung: **20.10.1993**
(21) Anmeldenummer: 93105036.3
(22) Anmeldetag: 26.03.1993
(51) Int. Cl.: C08G 65/32, C08G 65/26, C08G 18/48

(54) **Modifizierte aromatische Polyisocyanate und ihre Verwendung zur Herstellung von harten Urethangruppen aufweisended Schaumstoffen**

(30) Priorität: 08.04.1992 DE 4211774
(71) Anmelder: BAYER AG, 51368 Leverkusen (DE)
(72) Erfinder: Gebauer, Herbert, Dr., W-4150 Krefeld 1 (DE); Gupta, Pramod, Dr., W-5012 Bedburg (DE); König, Christian, Dr., W-4044 Kaarst (DE)

(57) **Zusammenfassung**

Aromatische Polyisocyanate werden durch Umsetzung mit 0,1 bis 10, vorzugsweise 2 bis 7 Gew.-% (bezogen auf Polyisocyanat) eines Polyetheralkohols vom Molekulargewicht 206 bis 948, erhältlich durch Reaktion von Alkylenoxiden mit 1 bis 3 aktive H-Atome aufweisenden C₆-C₃₀-, vorzugsweise C₈-C₂₀-Kohlenwasserstoffen, modifiziert und zur Herstellung von harten Polyurethanschaumstoffen verwendet.

## Beschreibung

Die Erfindung betrifft speziell modifizierte aromatische Polyisocyanate sowie die Herstellung von harten Urethangruppen aufweisenden Schaumstoffen unter Verwendung von derartigen Polyisocyanaten, die eine gute Aufnahmefähigkeit von als Treibmittel verwendeten Alkanen im zum Polyurethan führenden Reaktionsgemisch bewirken. Besonders bevorzugt ist die Verwendung von speziellen modifizierten Destillationssümpfen der Toluylendiisocyanat-Herstellung.

Bei der Herstellung von Toluydendiisocyanat (TDI) fallen bekanntlich Destillationssümpfe an, die neben monomerem TDI verschiedene Reaktionsprodukte bzw. Nebenprodukte enthalten, z.B. Carbodiimide, Uretonimine, Isocyanurate Uretdione, Harnstoffe. Dieser TDI-Sumpf verringert die Wirtschaftlichkeit des Verfahrens und verlangt bei einem thermischen Recycling der Sümpfe die Lösung größerer technischer Probleme. Die Lagerung solcher Destillationssümpfe auf Deponien stellt ferner eine starke Umweltbelastung dar.

In letzter Zeit sind Verfahren bekannt geworden, die eine TDI-Ausbeute-Verbesserung und somit eine Reduzierung des TDI-Sumpfes bewirken (DE-OS 28 50 609). Ein weitergehendes Verfahren wird z.B. in DD 257 827 A beschrieben, bei dem durch Zugabe von Isocyanaten der Diphenylmethanreihe (MDI) zum TDI-Rückstand und anschließende Destillation unter Vakuum ein Großteil des monom. TDI aus dem Sumpf wiedergewonnen wird. Der Restbestand an freiem TDI soll dabei im Bereich von ca. 1 % liegen. Hierbei wird zusätzlich eine Verbesserung der TDI-Monomer-Ausbeute durch Säureakzeptoren erhalten, wobei Chlorverbindungen des TDI gespalten werden. Der Restanteil aus TDI-Sumpf und MDI-Resten wird zur Herstellung von Polyurethanen empfohlen. Allerdings fehlt jeglicher Hinweis, wie der Restanteil verarbeitet werden soll. Versuche zeigen, daß sich solch ein Polyisocyanatgemisch aus TDI- und MDI-Anteilen (polyaromatisches Polyisocyanatgemisch) prinzipiell mit Polyolen und bekanntem halogenhaltigem Treibmittel verschäumen laßt, aber sehr spröde, leicht bröselige Polyurethan-Hattschäume ergibt, die in der Praxis nicht verwendbar sind.

Dies ist leicht verständlich, da bei zweifacher thermischer Belastung der Isocyanate die Mischung aus nicht destillierbaren TDI-Polymerresten und MDI mit stark schwankender Zusammensetzung an Nebenprodukten im TDI sowie neu entstehende Verbindungen aus den beiden Isocyanaten TDI und MDI entstehen können, so daß keine Polyurethan-Hartschäume mit Standardanforderungen erhalten werden können. Die hohe thermische Belastung führt zu dunkelbraungrauer Schaumfarbe und entspricht nicht dem Stand der Technik.

Zur Verbesserung der anwendungstechnischen Eigenschaften von Polyurethan-Hartschaumstoffen hat man schon Mono- oder polymere Isocyanate der TDI als auch MDI-Reihe mit Polyolen auf Ether- oder Ester-Basis modifiziert.

Versuche, diese obengenannten polyaromatischen Polyisocyanatgemische mit EO-, PO- und/oder Butylenoxid-Polyether-Polyolen auf Basis von TMP oder Propylenglykol zu urethanhaltigen Polyisocyanaten umzusetzen, brachten zwar geringe Verbesserungen der daraus hergestellten Schaumstoffe, die jedoch nicht den gestellten Anforderungen entsprachen.

Überraschenderweise wurde nun gefunden, daß Polyetheralkohole, die durch Umsetzung von Alkylenoxiden mit 1-3 aktive H-Atome aufweisenden C₆-C₃₀-Kohlenwasserstoffen erhältlich sind, bei der Umsetzung mit aromatischen Polyisocyanaten und besonders mit den obengenannten polyaromatischen Isocyanatgemischen ein urethanhaltiges, polyaromatisches Polyisocyanat-Gemisch ergeben, das sich gut als Polyisocyanat-Komponente für die Herstellung von Polyurethanhartschäumen oder Polyisocyanuratschäumen einsetzen läßt, wobei als Treibmittel die bekannten halogenhaltigen Kohlenwasserstoffe, aber auch Alkane, insbesondere Pentan, Wasser oder deren Mischungen verwendet werden können.

Die thermischen Belastungen bei der TDI-Rückstandsgewinnung ist je nach Charge stark schwankend. Dies hat zur Folge, daß die Zusammensetzung der TDI-Folge- und Nebenprodukte jeweils eine stark unterschiedliche Zusammensetzung aufweisen. Dieser mehr oder minder undefinierte TDI-Rückstand wird mit Isocyanaten der Diphenylmethanreihe (MDI) einer zweiten Destillation bzw. thermischen Belastung unterworfen, wobei MDI-Nebenprodukte wie Carbodiimide, Urethonimine, Isocyanurate, entstehen. Daneben sind auch die Bildung von Isocyanuraten und Uretoniminen, die aus TDI und MDI gebildet werden und bei der Destillation im Rückstand verbleiben, möglich. Dies hat zur Folge, daß die Zusammensetzung solcher polyaromatischen Polyisocyanatgemische starken Schwankungen unterliegt. Ferner enthalten diese eine sehr große Vielfalt der Neben- und Reaktionsprodukte.

Eine Steuerung der Destillationsprozesse, die eine einigermaßen gleichmäßige Zusammensetzung der polyaromatischen Isocyanatgemische ergeben, gestaltet sich sehr problematisch.

Solche polyaromatischen Polyisocyanatgemische zeigen einen starken Viskositätsanstieg innerhalb kurzer Zeit. Diese Viskositätszunahme ist wahrscheinlich Folge einer Weiterreaktion der beschriebenen Folge- und Nebenprodukte aus TDI und TDI-MDI-Rückstand mit im Überschuß vorhandenem MDI. Dieser Viskositätsanstieg kann so weit fortschreiten, daß nach kurzzeitiger Lagerung von 1-2 Monaten eine weitere Verarbeitung zu PU-Hartschäumen oder ein Einsatz in anderen Gebieten nicht mehr möglich ist.

Es wurde gefunden, daß durch die Modifizierung der bevorzugten polyaromatischen Polyisocyanatgemische mit den genannten Polyetheralkoholen eine Stabilisierung bzw. eine Verlangsamung des Viskositätsanstiegs auftritt.

Gegenstand der Erfindung ist ein Verfahren zur Herstellung von harten Urethan- und gegebenenfalls Isocyanuratgruppen aufweisenden Schaumstoffen durch Umsetzung von
a) Polyisocyanaten mit
b) mindestens zwei gegenüber Isocyanaten reaktionsfähige Wasserstoffatome aufweisenden Verbindungen vom Molekulargewicht 400-10 000 in Gegenwart von
c) Wasser und/oder leicht flüchtigen organischen Substanzen als Treibmittel und gegebenenfalls in Gegenwart von
d) mindestens zwei gegenüber Isocyanaten reaktionsfähige Wasserstoffatome aufweisenden Verbindungen vom Molekulargewicht 32-399 sowie
e) an sich bekannten Hilfs- und Zusatzmitteln,
dadurch gekennzeichnet, daß man als Polyisocyanat a) aromatische Polyisocyanate, die durch Umsetzung mit 0,1-10, vorzugsweise 2-7 Gew.-% (bezogen auf Polyisocyanat) eines Polyetheralkohols vom Molekulargewicht 206-948, erhältlich durch Reaktion von Alkylenoxiden mit 1-3 aktive H-Atome aufweisenden C₆-C₃₀-, vorzugsweise C₈-C₂₀-Kohlenwasserstoffen, modifiziert worden sind, verwendet.

Gegenstand der Erfindung sind ferner aromatische Polyisocyanate, die durch Umsetzung mit 0,1 bis 10, vorzugsweise 2 bis 7 Gew.-%, (bezogen auf Polyisocyanat) eines Polyetheralkohols vom Molekulargewicht 206 bis 948, erhältlich durch Reaktion von Alkylenoxiden mit 1 bis 3 aktive H-Atome aufweisenden C₆-C₃₀-, vorzugsweise C₈-C₂₀-Kohlenwasserstoffen, modifiziert worden sind.

Erfindungsgemäß bevorzugt ist ein Isocyanatgruppen aufweisendes Sumpfprodukt mit einem Gehalt an monomerem Toluylendiisocyanat von unter 200 ppm, bevorzugt <50 ppm (Gewicht), erhältlich aus
A) Destillationssümpfen der Toluylendiisocyanatherstellung durch Vermischen dieses Destillationssumpfes mit
B) gegebenenfalls Urethan- und/oder Allophanat-modifizierten Polyisocyanaten oder Polyisocyanatgemischen der Diphenylmethanreihe mit einem NCO-Gehalt von mindestens 15 Gew.-% und
C) destillative Aufarbeitung des Gemisches, wobei man das Gemisch vor oder während der destillativen Aufarbeitung auf Temperaturen von 190 bis 250°C erhitzt und hierdurch eine weitgehende Substitution des im Destillationssumpf A) reversibel gebundenen Toluylendiisocyanats durch Polyisocyanat B) bewirkt, sowie
D) Umsetzung des erhaltenen Destillationssumpfes mit 0,1-10, vorzugsweise 2-7 Gew.-% (bezogen auf Destillationssumpf) eines Polyetheralkohols vom Molekulargewicht 206 bis 948, erhältlich durch Reaktion von Alkylenoxiden mit 1-3 aktive H-Atome aufweisenden C₆-C₃₀-, vorzugsweise C₈-C₂₀-Kohlenwasserstoffen,
verwendet.

Erfindungsgemäß bevorzugt ist ferner, daß
- man als Komponente B) 4,4'-Diisocyanatodiphenylmethan, seine technischen Gemische mit 2,4'- und gegebenenfalls 2,2'-Diisocyanatodiphenylmethan-Isomeren mit bis zu 65 Gew.-%, bezogen auf Gemisch, ihrer höheren, mehr als 2 Isocyanatgruppen pro Molekül aufweisenden Homologen verwendet,
- NCO-Gruppen aufweisende Sumpfprodukte verwendet werden, denen 10-80 Gew.-%, bevorzugt 20-60 Gew.-%, Polyisocyanate der Diphenylmethanreihe zugemischt wurden,
- als Polyisocyanate der Diphenylmethanreihe Gemische der Diisocyanatodiphenylmethan-Isomeren mit bis zu 65 Gew.-% (bezogen auf Gemisch) ihrer höheren mehr als 2 Isocyanatgruppen pro Molekül aufweisenden Homologen zugemischt werden.

Für die Herstellung der Urethangruppen und gegebenenfalls Isocyanuratgruppen aufweisenden Schaumstoffe werden eingesetzt:
a) Als Ausgangskomponenten aromatische Polyisocyanate, wie sie z.B. von W. Siefken in Justus Liebigs Annalen der Chemie, 562, Seiten 75-136, beschrieben werden, beispielsweise solche der Formel

   Q(NCO)ₙ,

   in der
   n = 2-4, vorzugsweise 2-3,
   und
   Q einen aromatischen Kohlenwasserstoffrest mit 6-15, vorzugsweise 6-13 C-Atomen oder einen araliphatischen Kohlenwasserstoffrest mit 8-15, vorzugsweise 8-13 C-Atomen bedeuten, z.B. solche Polyisocyanate, wie sie in der DE-OS 28 32 253, Seiten 10-11, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren (''TDI''); Polyphenylpolymethylenpolyisocyanate, wie sie durch Anilin-Formaldehyd-Kondensation und anschließende Phosgenierung hergestellt werden (''rohes MDI'') und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.
   Erfindungsgemäß bevorzugt sind die obengenannten NCO-Gruppen aufweisenden modifizierten Sumpfprodukte.
   Ausgangskomponenten für die zur Modifizierung verwendeten Polyether sind Alkylenoxide wie Ethylenoxid, Propylenoxid, Butylenoxid sowie deren Gemische einerseits und 1-3 aktive H-Atome aufweisende C₆-C₃₀-, vorzugsweise C₈-C₂₀-Kohlenwasserstoffe wie Stearylalkohol, Stearylamin, Dodecylalkohol, Dodecylamin, Isooctylalkohol oder Octylamin andererseits. Polyether, die überwiegend Propylenoxid als Alkylenoxid-Komponente enthalten, sind bevorzugt.
b) Ausgangskomponenten sind ferner Verbindungen mit mindestens zwei gegenüber Isocyanaten reaktionsfähigen Wasserstoffatomen von einem Molekulargewicht in der Regel von 400-10 000. Hierunter versteht man neben Aminogruppen, Thiogruppen oder Carboxylgruppen aufweisende Verbindungen vorzugsweise Hydroxylgruppen aufweisende Verbindungen, insbesondere 2 bis 8 Hydroxylgruppen aufweisende Verbindungen, speziell solche vom Molekulargewicht 1000 bis 6000, vorzugsweise 2000 bis 6000, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der DE-OS 28 32 253, Seiten 11-18, beschrieben werden.
c) Als Treibmittel werden Wasser und/oder die an sich bekannten leicht flüchtigen organischen Substanzen verwendet, vorzugsweise Pentan, Isopentan, Cyclopentan.
d) Gegebenenfalls sind weitere Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 19-20, beschrieben.
e) Gegebenenfalls werden Hilfs- und Zusatzmittel mitverwendet wie
   - Katalysatoren der an sich bekannten Art in Mengen von bis zu 10 Gew.-%, bezogen auf die Komponente b),
   - oberflächenaktive Zusatzstoffe, wie Emulgatoren und Schaumstabilisatoren,
   - Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und weitere Flammschutzmittel der an sich bekannten Art, z.B. Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide.

Diese gegebenenfalls mitzuverwendenden Hilfs- und Zusatzstoffe werden beispielsweise in der DE-OS 27 32 292, Seiten 21-24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113, beschrieben.

Durchführung des Verfahrens zur Herstellung von Polyurethankunststoffen:
Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121-205, beschrieben.

Selbstverständlich können auch die Schaumstoffe durch Blockverschäumung oder nach dem an sich bekannten Doppeltransportbandverfahren hergestellt werden.

Die nach der Erfindung erhältlichen Schaumstoffe Finden z.B. als Dämmplatten für die Dachisolierung Anwendung.

### Ausführungsbeispiele

### 1. Herstellung der zur Modifizierung der Isocyanat-Komponente verwendeten Polyether

Die Herstellung eines Polyetheralkohols zur Modifizierung des polyaromaten Polyisocyanatgemisches erfolgt nach den bekannten Bedingungen. Hierbei werden die erforderlichen Mengen, z.B. an Starter wie Isooctylalkohol, Stearylalkohol oder -amin, vorgelegt. Anschließend wird unter Verwendung üblicher Basen wie z.B. NaOH, KOH die Epoxide bei 100-120°C addiert Das Addukt wird neutralisiert und nach bekannten Verfahren aufgearbeitet.

Für die Modifizierung verwendete Mono- oder Polyole sind im folgenden als Polyether-Beispiel 1 bis 5 beschrieben.

### Polyether-Beispiel 1

Polyether, hergestellt durch Propoxylierung von Stearylalkohol unter Verwendung von 1,350 mol Propylenoxid und 0,593 mol Ethylenoxid pro reaktivem Wasserstoff des Starters

| | |
|---|---|
| OH-Zahl (mg KOH/g) | 150 |
| Wassergehalt (Gew.-%) | 0,02 |
| mittlere Funktionalität | 1,0 |
| mittleres Molekulargewicht | 374 |

### Polyether-Beispiel 2

Polyether, hergestellt durch Propoxylierung von Propylenglykol unter Verwendung von 5,643 mol Propylenoxid und 3,188 mol Ethylenoxid pro reaktivem Wasserstoffatom des Starters.

| | |
|---|---|
| OH-Zahl (mg KOH/g) | 112 |
| Wassergehalt (Gew.-%) | 0,02 |
| mittlere Funktionalität | 2,0 |
| mittleres Molekulargewicht | ca.1001 |

### Polyether-Beispiel 3

Polyether, hergestellt durch Propoxylierung von Stearylamin unter Verwendung von 5,693 mol Propylenoxid und 0,834 mol Ethylenoxid pro reaktivem Wasserstoffatom des Starters.

| | |
|---|---|
| OH-Zahl (mg KOH/g) | 270 |
| Wassergehalt (Gew.-%) | 0,02 |
| mittlere Funktionalität | 2 |
| mittleres Molekulargewicht | ca. 410 |

### Polyether-Beispiel 4

Polyether, hergestellt durch Propoxylierung von Dodecylalkohol unter Verwendung von 0,5 mol Propylenoxid und 0,13 mol Butylenoxid pro reaktivem Wasserstoffatom des Starters.

| | |
|---|---|
| OH-Zahl (mg KOH/g) | 248 |
| Wassergehalt (Gew.-%) | 0,01 |
| mittlere Funktionalität | 1,0 |
| mittleres Molekulargewicht | ca. 226 |

### Polyether-Beispiel 5

Polyether, hergestellt durch Propoxylierung von Stearylalkohol unter Verwendung von 5 mol Propylenoxid pro reaktivem Wasserstoffatom des Starters.

| | |
|---|---|
| OH-Zahl (mg KOH/g) | 101 |
| Wassergehalt (Gew.-%) | 0,01 |
| mittlere Funktionalität | 1,0 |
| mittleres Molekulargewicht | ca. 560 |

### 2. Herstellung der zu modifizierenden Polyisocyanate

### Isocyanat-Beispiel 1 Herstellung entsprechend dem Verfahren gemäß DE-OS 41 27 514

Aus einem Gemisch von 18 % eines TDI-Rückstandes und 82 % MDI, bestehend aus 93 % 44'-MDI, ca. 6,5 % 2,4'-MDI und 0,5 % 3-Kern-MDI, wird das freie TDI im Vakuum aus dem TDI-Rückstand mit MDI destillativ abgetrennt.

Das anfallende Sumpf-Gemisch an polyaromatische Polyisocanaten aus TDI-Rückstand und MDI zeigt einen Restgehalt an freiem TDI von 60 ± 20 pp, der NCO-Wert beträgt 28,3 %. Viskosität des Isocyanatgemisches nach Herstellung ca. 350 mPas bei 25°C nach 6 Wochen bei 850 mPas bei praktisch gleichem NCO-Wert. Dies entsprach den Ausgangswerten für die Ausführungsbeispiele.

### Isocyanat-Beispiel 2 Herstellung nach dem Verfahren gemäß DE-OS 41 27 514

Aus einem Gemisch von 10 % eines TDI-Rückstandes und 90 % MDI, bestehend aus 53 % 44'-MDI, ca 2,0 % 2,4'-MDI und 45 % drei- und höherkerniges MDI, wird das freie TDI im Vakuum aus dem TDI-Rückstand mit MDI destillativ abgetrennt.

Das anfallende Sumpf-Gemisch an polyaromatischen Polyisocyanaten aus TDI-Rückstand und MDI zeigt einen Restgehalt an freiem TDI von 200 ± 20 ppm, der NCO-Wert beträgt 29,2 %. Die Viskosität des Isocyanatgemisches beträgt nach Herstellung ca. 3000 mPas/25°C; nach 8 Wochen 4250 mPas/25°C bei praktisch vergleichbarem NCO-Wert. Dies entspricht den Ausgangswerten für die Ausführungsbeispiele.

### Isocyanatbeispiel 3

Polyisocyanatgemisch der Diphenylmethanreihe mit einem Gehalt an Düsocyanatodiphenylmethan-Isomeren (MDI) von 28 Gew.-%, wovon 26,5 Gew.-% 4,4'-MDI; 1,5 Gew.-% 2,4'-MDI sind, und mit 72 Gew.-% höherfunktionellen polymeren Polyisocyanaten der Diphenylmethanreihe; Viskosität: 2040 mPas/25°C, NCO-Wert: 30,5 % NCO.

### 3. Herstellung der erfindungsgemäßen Polyisocyanate

### Ausführungsbeispiel 1

In einem mit Rührer, Tropftrichter, Thermometer, Stickstoffzu- und -ableitung versehenen Dreihalskolben werden 462,5 g Polyisocyanat 1 eingefüllt. Unter Rühren und unter Stickstoffatmosphäre werden anschließend bei 60°C während eines Zeitraums von 3 Stunden 37,5 g Polyether gemäß Polyetherbeispiel 1, wie in Tabelle 1 angegeben, zugetropft Danach wird unter weiterem Rühren das Umsetzungsprodukt eine Stunde bei 60°C temperiert und danach auf Raumtemperatur abgekühlt. Das erhaltene Reaktionsgemisch zeigt einen NCO-Gehalt von 26,3 %, Viskosität: 890 mPas 25°C.

### Ausführungsbeispiel 2

Das Reaktionsgemisch aus Ausführungsbeispiel 1 wird mit einem handelsüblichen Polyisocyanat der Viskosität von 200 mPas und einem NCO-Wert von 32,0 (Desmodur® 44 V20; Bayer AG) 1:1 abgemischt. Hierbei entsteht ein verarbeitungsfähiges Reaktionsgemisch eines urethanhaltigen Polyisocyanats mit einer Viskosität von 438 mPas/25°C und einem NCO-Wert von 29,0 % NCO.

### Ausführungsbeispiel 3

Entsprechend Ausführungsbeispiel 1 werden 465 g Polyisocyanat 1 mit 35 g Polyether gemäß Polyetherbeispiel 2 umgesetzt.

| | |
|---|---|
| NCO-Wert | 25,8 % NCO |
| Viskosität | 1090 mPas/25°C. |

### Ausführungsbeispiel 4

Entsprechend Ausführungsbeispiel 1 werden 925 g Polyisocyanat 2 mit 75 g Polyether gemäß Polyetherbeispiel 1 umgesetzt.

| | |
|---|---|
| NCO-Wert | 26,05 % NCO |
| Viskosität | 3680 mPas/25°C. |

### Ausführungsbeispiel 5

Entsprechend Ausführungsbeispiel 1 werden 475 g Polyisocyanat 1 mit 25 g Polyether gemäß Polyetherbeispiel 4 umgesetzt. Das Reaktionsprodukt weist einen NCO-Wert von 26,1 % und eine Viskosität von 935 mPas/25°C auf. Überraschenderweise wurde beobachtet, daß der Anteil an farbigen Komponenten, der in diesem Isocyanatgemisch für den dunkelbraunen Farbton beim Verarbeiten zu Polyurethanschäumen entsteht, durch die Umsetzung des erfindungsgemäßen Isocyanatgemisches verringert wild. Dies wird nicht durch einen Verdünnungseffekt durch den farblosen Polyetheralkohol hervorgerufen; sondern diese Farbreduzierung ist Folge der Umsetzungsreaktion.

### Ausführungsbeispiel 6

Entsprechend Ausführungsbeispiel 1 werden 237,5 g Polyisocyanat des Isocyanatbeispiels 3 mit 12,5 g Polyether gemäß Polyetherbeispiel 4 umgesetzt. Das Reaktionsprodukt weist einen NCO-Wert von 28,55 % NCO und eine Viskosität von 2135 mPas/25°C auf.

### Ausführungsbeispiel 7

Bei Zimmertemperatur wird eine Mischung aus 250 g gemäß Ausführungsbeispiel 6 mit 250 g gemäß Isocyanatbeispiel 3 hergestellt.
NCO-Wert: 29,5 % NCO
Viskosität: 2090 mPas/25°C
Die Beurteilung der Farbwerte des MDI-Polymer und deren Änderungen erfolgte durch die Messung der Extinktionswerte bei E = 520 nm und E = 430 nm, wobei eine Lösung von 2 g MDI in 100 ml Monochlorbenzol (p.A) in einem Fotometer vermessen werden, z.B. mit einem Digital Photometer LP 1 W; der Dr. Lange GmbH Berlin.

Die in Ausführungsbeispiel 1 aufgelisteten Werte zeigen eine deutliche Reduzierung der Extinktionswerte. Bei E 430 nm wird der Ausgangswert (Isocyanat-Beispiel 1) von E = 1,352 auf E = 1,068 und bei E 520 nm von E = 0,435 auf E = 0,277 reduziert.

Als Vergleich zu der farbreduzierenden Wirkung durch das aus dem Polyetheralkohol entstehende urethanhaltige, aromatische Isocyanatgemisch wurde der Verdünnungseffekt ermittelt. Der Polyetheralkohol ist bekanntlich eine farblose Flüssigkeit.

Das Ausgangsisocyanat wurde mit der gleichen Menge an einem inerten Lösungsmittel (Monochlorbenzol) verdünnt und danach unter gleichen Bedingungen vermessen.

| | E 430 nm | E 520 nm |
|---|---|---|
| Ausgangswert Isocyanat-Beispiel 1 | 1,352 | 0,435 |
| verdünnt mit 7,5 % Monochlorbenzol | 1,323 | 0,410 |
| Ausführungsbeispiel 1 (Umsetzung mit 7,5 % Polyetheralkohol) | 1,068 | 0,277 |

Die Werte bestätigen einen durch erfindungsgemäße Prepolymerisierung erzielten Aufhellungseffekt.

Durch die Umsetzung der erfindungsgemäß verwendeten Polyethermonoalkohole mit dem Isocyanatgemisch kann überraschenderweise eine viskositätsstabilisierende Wirkung erreicht werden.

Der bekannte Viskositätsanstieg des polyaromatischen Polyisocyanatgemisches wird wahrscheinlich durch eine Weiterreaktion der im Isocyanatgemisch vorhandenen TDI, MDI und TDI-MDI-Folgeprodukte mit im Überschuß vorhandenem MDI hervorgerufen und kann durch Bildung von urethanhaltigen Verbindungen im Isocyanatgemisch verringert werden.

Das Isocyanat-Beispiel 1 zeigte nach 5,5 Monaten einen Viskositätsanstieg von 850 auf 1840 mPas/25°C, während das Ausführungsbeispiel 1 (erfindungsgemäßes, urethanhaltiges Polyaromatenisocyanatgemisch) einen Viskositätsanstieg von 813 mPas auf 1480 mPas aufwies.

Polyaromatische Polyisocyanatgemische, wie im Isocyanat-Beispiel 1 beschrieben, zeigen gegenüber einem handelsüblichen polymeren MDI, wie Desmodur® 44 V 20 (Bayer AG), eine geringere Löslichkeit des alternativen Treibmittels Pentan. Überraschenderweise wurde aber gefunden, daß durch Umsetzung solcher polyaromatischer Polyisocyanatgemische mit erfindungsgemäßem Polyetheralkohol, wie Ausführungsbeispiel 1 zeigt, eine wesentliche Verbesserung der Alkanaufnahmefähigkeit bewirkt wird. Zur Bestimmung der Alkanaufnahme wird in einem kalibrierten, verschließbaren, 100 ml fassenden Meßzylinder 50 ml Polyisocyanat und 50 ml Pentan gegeben, gut durchgeschüttelt und nach 15 min die sich bildende Phasengrenze an der Kalibrierung abgelesen. Die Phasengrenze ist ein Maß in Volumenprozenten für die Aufnahmefähigkeit von Pentan im Polyisocyanat.

| Polyisocyanat | Isocyanat-Phasengrenze im Meßzylinder | gelöstes Pentan im Isocyanat Vol.-% |
|---|---|---|
| Desmodur 44 V 20 | 55 ml | 10 % |
| Isocyanatbeispiel 1 | 52 ml | 4 % |
| Ausführungsbeispiel 1 | 56 ml | 12 % |
| Isocyanatbeispiel 3 | 54 ml | 8 % |
| Ausführungsbeispiel 6 | 70 ml | 40 % |
| Ausführungsbeispiel 7 | 61 ml | 22 % |

### 4. Beispiele für das erfindungsgemäße Verfahren

### Verwendungsbeispiele 1 bis 3

Die gemäß Ausführungsbeispielen 1 bis 3 erhaltenen erfindungsgemäßen Polyisocyanatgemische werden zur Herstellung von Hartschaumprüfkörpern eingesetzt.

Hierbei wird wie folgt verfahren:

### Verwendungsbeispiel 1

### Ausgangsmaterialien

### Polyolkomponente 1

1. 100 Gew.-Tle eines für PU-Hartschaum handelsüblichen Polyolgemisches der OH-Zahl 500 mit einer Viskosität bei 25°C von 4 100 mPas,
2. 3 Gew.-Tle Tris-(chlorisopropyl)-phosphat als Flammschutzmittel,
3. 1,5 Gew.-Tle eines handelsüblichen Polyetherpolysiloxan-Schaumstabilisators (Tegostab® B 8404, Goldschmidt AG, Essen),
4. 10 Gew.-Tle N,N-Dimethyl-cyclohexylamin als Katalysator,
5. 0,6 Gew.-Tle Wasser,
6. 35 Gew.-Tle Trichlorfluormethan als Treibmittel.

### Isocyanatkomponenten

175 Gew.-Tle gemäß Ausführungsbeispiel 4 bzw. 135 Gew.-Tle eines handelsüblichen Polyisocyanats Desmodur® 44 V 20 (jeweils entsprechend einer Isocyanat-Kennzahl von 110).

Das Gemisch aus Polyol, Flammschutzmittel, Stabilisator, Aktivator und Wasser wird jeweils einem Metukomponenten-Dosiermischaggregat zugeführt und mit Polyisocyanat in einem Mischkopf vermischt und sofort in eine allseits geschlossene Form eingetragen. Die Mischung beginnt jeweils sofort aufzuschäumen. Sie bindet jeweils nach ca. 30 s ab. Nach 15 min wird das Formteil (100 x 100 x 7 cm) entformt.

Das Formteil hat eine allseitig geschlossene Deckschicht und einen zelligen Kern.

Die erhaltenen Polyurethan-Hartschäume sind in den bekannten Spezifikationen, wie Zellgröße, Zellstruktur, Haftung, Schrumpf sowie Wasseraufnahme vergleichbar.

### Verwendungsbeispiel 2

### Ausgangsmaterialien

### Polyolkomponente 2

1. 102,7 Gew.-Tle eines für PU-Hartschaum handelsüblichen Polyolgemisches der OH-Zahl 481 mit einer Viskosität bei 25°C von 1600 mPas enthaltend 1,5 Gew.-Tle Wasser sowie 1,2 Gew.-Tle des handelsüblichen Polyetherpolysiloxan-Schaumstabilisators PU 1783, Bayer AG, Leverkusen,
2. 0,7 Gew.-Tle Wasser
3. 9 Gew.-Tle Pentan als Treibmittel.

### Verwendungsbeispiel 3

### Ausgangsmaterialien

### Polyolkomponente 3

1. 100 Gew.-Tle eines für PU-Hartschaum handelsüblichen Polyolgemisches der OH-Zahl 345 mit einer Viskosität bei 25°C von 2300 mPas,
2. 2,2 Gew.-Tle Wasser,
3. 2 Gew.-Tle eines handelsüblichen Polyetherpolysiloxan-Schaumstabilisators PU 1783, Bayer AG, Leverkusen,
4. 9 Gew.-Tle Pentan als Treibmittel.

Die Polyolkomponenten der Verwendungsbeispiele 2 und 3 wurden nach den in Tabelle 1 aufgeführten Rezepturen mit Aktivator N,N-Dimethylcyclohexylamin und Isocyanatkomponente vermischt und in eine allseits geschlossene Form eingetragen. Die Mischung beginnt jeweils sofort aufzuschäumen. Sie bindet jeweils nach ca. 30 s ab. Nach 15 min wird das Formteil (100 x 100 x 7 cm) entformt. Das Formteil hat eine allseitig geschlossene Deckschicht und einen zelligen Kern.

Die erhaltenen Polyurethan-Hartschäume sind in den bekannten Spezifikationen, wie Zellgröße, Zellstruktur, Haftung, Schrumpf sowie Wasseraufnahme vergleichbar.

**Tabelle 1**

| Rezeptur (Gew.-Tle) | 1 | 2 | 3 | 4 | 5 | 6 |
|---|---|---|---|---|---|---|
| Polyolkomponente 2 | 112,4 | 112,4 | 112,4 | - | - | - |
| Polyolkomponente 3 | - | - | - | 113,2 | 113,2 | 113,2 |
| Dimethylcyclohexylamin | 1,1 | 1,0 | 1,2 | 1,1 | 1,0 | 1,2 |
| Desmodur® 44 V 40 (Bayer AG) | 141 | - | - | 139 | - | - |
| Polyisocyanat gemäß Isocyanatbeispiel 2 | - | 152 | - | - | 150 | - |
| Polyisocyanat gemäß Ausführungsbeispiel 4 | - | - | 171 | - | - | 168 |
| Kennzahl | 110 | 110 | 110 | 110 | 110 | 110 |
| Startzeit [s] | 18 | 16 | 20 | 16 | 18 | 18 |
| Abbindezeit [s] | 47 | 47 | 49 | 44 | 44 | 45 |
| freie Rohdichte [kg/m³] | 33 | 35 | 37 | 33 | 34 | 37 |

**Tabelle 2**

| Ergebnisse der Schaumstoffprüfungen | | | | | | |
|---|---|---|---|---|---|---|
| Rezeptur-Nr. | 1 (Vergleich) | 2 (Vergleich) | 3 (Erfindungsgemäß) | 4 (Vergleich) | 5 (Vergleich) | 6 (Erfindungsgemäß) |
| Oberfläche | zäh | zäh | zäh | zäh | zäh | zäh |
| Zellgröße | fein | fein | fein | fein | fein | fein |
| Zellstruktur | gleichmäßig | gleichmäßig | gleichmäßig | gleichmäßig | gleichmäßig | gleichmäßig |
| Haftung nach 8 min | + | -- | + | + | -- | + |
| Haftung nach 24 h | + | - | + | - | - | + |
| Durchhärtung | ++ | ± | ++ | ++ | ± | ++ |
| Bodenstörungen | leicht | stark | keine | leicht | stark | keine |
| Offenzelligkeit in % | 7 | 25 | 7 | 6 | 20 | 5 |

Die mit der erfindungsgemäßen Isocyanatkomponente hergestellten Schaumstoffe zeigen gegenüber den Vergleichsbeispielen gleiche Schaumstoffeigenschaften hinsichtlich Oberfläche, Zellgröße, Zellstruktur.

In Bezug auf die Haftung von Papierdeckschichten, der Durchhärtung und der Offenzelligkeit erreichen sie das Werteniveau des Desmodur® 44 V 40 (Bayer AG). Ein ausgesprochener Vorteil gegenüber den Vergleichsbeispielen liegt in der Störungsfreiheit der Bodenzone.

## Patentansprüche

1. Verfahren zur Herstellung von harten Urethan- und gegebenenfalls Isocyanuratgruppen aufweisenden Schaumstoffen durch Umsetzung von
a) Polyisocyanaten mit
b) mindestens zwei gegenüber Isocyanaten reaktionsfähige Wasserstoffatome aufweisenden Verbindungen vom Molekulargewicht 400 bis 10 000 in Gegenwart von
c) Wasser und/oder leicht flüchtigen organischen Substanzen als Treibmittel und gegebenenfalls in Gegenwart von
d) mindestens zwei gegenüber Isocyanaten reaktionsfähige Wasserstoffatome aufweisenden Verbindungen vom Molekulargewicht 32 bis 399 sowie
e) an sich bekannten Hilfs- und Zusatzmitteln,
dadurch gekennzeichnet, daß man als Polyisocyanate a) aromatische Polyisocyanate, die durch Umsetzung mit 0,1-10, vorzugsweise 2-7 Gew.-% (bezogen auf Polyisocyanat) eines Polyetheralkohols vom Molekulargewicht 206-948, erhältlich durch Reaktion von Alkylenoxiden mit 1-3 aktive H-Atome aufweisenden C₆-C₃₀-, vorzugsweise C₈-C₂₀-Kohlenwasserstoffen, modifiziert worden sind,
verwendet.

2. Verfahren gemäß Anspruch 1, dadurch gekennzeichnet, daß man als Polyisocyanate a) ein Isocyanatgruppen aufweisendes Sumpfprodukt mit einem Gehalt an Toluylendiisocynat von unter 200 ppm, vorzugsweise unter 50 ppm (Gewicht), erhältlich aus
A) Destillationssümpfen der Toluylendiisocyanatherstellung durch Vermischen dieses Destillationssumpfes mit
B) gegebenenfalls Urethan- und/oder Allophanat-modifizierten Polyisocyanaten oder Polyisocyanatgemischen der Diphenylmethanreihe mit einem NCO-Gehalt von mindestens 15 Gew.-% und
C) destillative Aufarbeitung des Gemischs, wobei man das Gemisch vor oder während der destillativen Aufarbeitung auf Temperaturen von 190 bis 250°C erhitzt und hierdurch eine weitgehende Substitution des im Destillationsrückstand A) reversibel gebundenen Toluylendiisocyanats durch Polyisocyanat B) bewirkt, sowie
D) Umsetzung des erhaltenen Destillationssumpfes mit 0,1-10. vorzugsweise 2-7 Gew.-% (bezogen auf Destillationssumpf) eines Polyetheralkohols vom Molekulargewicht 206 bis 948, erhältlich durch Reaktion von Alkylenoxiden mit 1-3 aktive H-Atome aufweisenden C₆-C₃₀-, vorzugsweise C₈-C₂₀-Kohlenwasserstoffen,
verwendet.

3. Verfahren gemäß Anspruch 2, dadurch gekennzeichnet, daß man als Komponente B) 4,4'-Diisocyanatodiphenylmethan, seine technischen Gemische mit 2,4'- und gegebenenfalls 2,2'-Diisocyanatodiphenylmethan oder Gemische dieser Diisocyanatodiphenylmethan-Isomeren mit bis zu 65 Gew.-%, bezogen auf Gemisch, ihrer höheren, mehr als 2 Isocyanatgruppen pro Molekül aufweisenden Homologen verwendet.

4. Verfahren nach Anspruch 2 und 3, dadurch gekennzeichnet, daß NCO-Gruppen aufweisende Sumpfprodukte verwendet werden, denen 20 bis 80 Gew.-%, bevorzugt 40 bis 60 Gew.-%, Polyisocyanate der Diphenylmethanreihe zugemischt werden.

5. Verfahren nach Anspruch 2 bis 4, dadurch gekennzeichnet, daß als Polyisocyanate der Diphenylmethanreihe Gemische der Diisocyanato-diphenylmethan-Isomeren mit bis zu 65 Gew.-% (bezogen auf Gemisch) ihrer höheren mehr als 2 Isocyanatgruppen pro Molekül aufweisenden Homologen zugemischt werden.

6. Aromatische Polyisocyanate, die durch Umsetzung mit 0,1 bis 10, vorzugsweise 2 bis 7 Gew.-% (bezogen auf Polyisocyanat) eines Polyetheralkohols vom Molekulargewicht 206 bis 948, erhältlich durch Reaktion von Alkylenoxiden mit 1 bis 3 aktive H-Atome aufweisenden C₆-C₃₀-, vorzugsweise C₈-C₂₀-Kohlenwasserstoffen, modifiziert worden sind.

7. Aromatische Polyisocyanate gemäß Anspruch 6, die ein Isocyanatgruppenaufweisendes Sumpfprodukt mit einem Gehalt an Toluylendiisocyanat von unter 200 ppm, vorzugsweise unter 50 ppm (Gewicht) darstellen, das aus
A) Destillationssümpfen der Toluylendiisocyanatherstellung durch Vermischen dieses Destillationssumpfes mit
B) gegebenenfalls Urethan- und/oder Allophanat-modifizierten Polyisocyanaten oder Polyisocyanatgemischen der Diphenylmethanreihe mit einem NCO-Gehalt von mindestens 15 Gew.-% und
C) destillative Aufarbeitung des Gemischs, wobei man das Gemisch vor oder während der destillativen Aufarbeitung auf Temperaturen von 190 bis 250°C erhitzt und hierdurch eine weitgehende Substitution des im Destillationsrückstand A) reversibel gebundenen Toluylendiisocyanats durch Polyisocyanat B) bewirkt, sowie
D) Umsetzung des erhaltenen Destillationssumpfes mit 0,1-10, vorzugsweise 2-7 Gew.-% (bezogen auf Destillationssumpf) eines Polyetheralkohols vom Molekulargewicht 206 bis 948, erhältlich durch Reaktion von Alkylenoxiden mit 1-3 aktive H-Atome aufweisenden C₆-C₃₀-, vorzugsweise C₈-C₂₀-Kohlenwasserstoffen,
erhältlich ist.
